Europäisches Patentamt

European Patent Office

Office européen des brevets

(19)

(11) Publication number: **0 135 346**
**A2**

(12) **EUROPEAN PATENT APPLICATION**

(21) Application number: **84305407.3**

(22) Date of filing: **08.08.84**

(51) Int. Cl.⁴: **A 63 B 21/00**
**A 63 B 23/00**
**//F16F9/44**

(30) Priority: **12.08.83 GB 8321728**

(43) Date of publication of application:
**27.03.85 Bulletin 85/13**

(84) Designated Contracting States:
**DE FR GB**

(71) Applicant: **HORNG MEEI SPRING ENTERPRISE CO., LTD.**
**145 Jen Ho road**
**Tainan (700)(TW)**

(72) Inventor: **Wu, Hann Chou**
**145 Jen Ho Road**
**Tainan(TW)**

(74) Representative: **Brown, David Alan et al,**
**MATHYS & SQUIRE 10 Fleet Street**
**London EC4Y 1AY(GB)**

(54) Exercising apparatus.

(57) Exercising apparatus comprises a frame (2), a handle assembly (13,14) arranged to be grasped by a user and connected to the frame so that it can be moved upwards and downwards by the user to simulate weight-lifting exercises. A hydraulic piston and cylinder device (101) is connected between the handle assembly (13,14) and the frame (11) so that on upward movement of the handle assembly a piston (109,112) is moved in one direction in the cylinder (101) whilst on downward movement of the handle assembly the piston is moved in the opposite direction. The cylinder (101) is filled with hydraulic fluid and the piston (109,112) has passages (119,121,122) through which fluid flows from one side of the piston to the other during movement of the piston, and valve means (111) operable to restrict the total cross-sectional area of the passages when the piston moves in the said one direction, to increase the face required to lift the handles (13,14) against the resistance of the fluid and to open fully the passage means when the piston moves in the opposite direction to reduce to zero or a low value the force required to lower the handles. The piston is in two parts, one of which can be rotated relative to the other to vary the alignment between passages in one part and a series of passages of different cross-sections in the other part, to alter the total cross-sectional area of the passages thereby to adjust the resistance of the fluid to upward movement of the handles. The apparatus can be disassembled for storage or transport.

FIG.1



0135346

This invention relates to exercising apparatus.

More particularly the invention relates to apparatus which can take the place of traditional weight-lifting apparatus. Traditional weight-lifting apparatus comprises a selection of discs of different weights which are releasably attached to the ends of a bar, the number and weight of the discs being selected according to the user's age, sex and physical condition. Changing the weights is time consuming, and the total weight of the apparatus makes it inconvenient to transport. Careless manipulation of the apparatus can cause injury to the user or damage to the floor.

It is an object of the invention to provide an apparatus which can be used for weight-lifting exercises and which does not suffer from the above-mentioned disadvantages.

This invention consists in exercising apparatus comprising a frame, a handle assembly arranged to be grasped by a user and connected to the frame so that it can be moved upwards and downwards by the user, in which a hydraulic piston and cylinder device is connected between the handle assembly and the frame so that on upward movement of the handle assembly a piston is moved in one direction in the cylinder whilst on downward movement of the handle assembly the piston is moved in the opposite direction, the cylinder is filled with hydraulic fluid and the piston has passage means through which fluid flows from one side of the piston to the other during movement of the piston, and in which the piston is provided with valve means operable to restrict the cross-sectional area of the passage means when the piston moves in the said one direction, to increase the force required to lift the handles against the resistance of the fluid and to open fully the passage means when the piston moves in the opposite direction to reduce the force required to lower the handles, and adjusting means for adjusting the cross-sectional area of the passage means thereby to adjust the resistance of the fluid to upward movement of the handles.

Preferably, the piston comprises two parts rotatable relative to one another, one part of the piston having a plurality of holes of different cross-sectional areas arranged in a circle around the axis of the piston, all but one of the holes being closed by the valve means when the piston is moving in the said one direction, the selection of the hole which remains open being dependent on the relative angular orientation of the two parts of the piston, and the adjusting means is arranged to alter the relative orientation of the two parts of the piston.

The valve means may comprise a valve member movable axially in a cavity between the two parts of the piston, the valve member having a hole which is aligned with the selected one of the said plurality of holes in one part
of the piston, the valve member being rotatable with the
other part of the piston.

Suitably, the means for altering the relative
orientation of the two parts of the piston comprises interengaging
elements on one part of the piston and on the cylinder, the
elements engaging one another to hold the said one part of the
piston against angular movement when the piston is in a
predetermined position, and the other part of the piston being
fixed to the piston rod so that it can be rotated by
rotating the piston rod.

Preferably, the handle assembly is pivoted to the
main frame and the piston and cylinder device is pivoted at
its lower end to the frame and at its upper end to the
handle assembly, and in which the connections to the frame
of the piston and cylinder device and of the handle assembly
are adjustable in position.

The apparatus thus enables weight lifting exercises
to be carried out, with the resistance to upward movement
of the handle assembly providing a realistic feeling of weight
lifting.  The resistance, and therefore the apparent load to
be lifted, can be quickly changed to suit different users. The
apparatus can be made relatively light-weight, so that it
can be easily transported, and can be made easy to disassemble for
transport or storage.

The invention will now be described, by way of example, with reference to the accompanying drawings, in which:

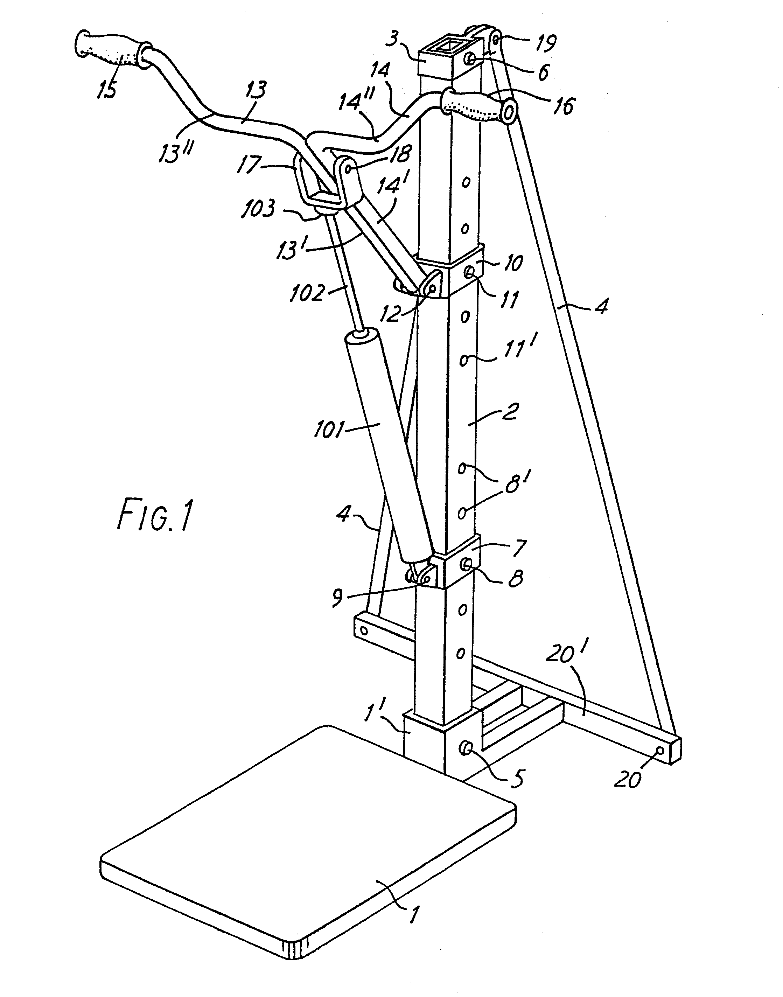

Figure 1 is a general view of an exerciser in accordance with the invention,

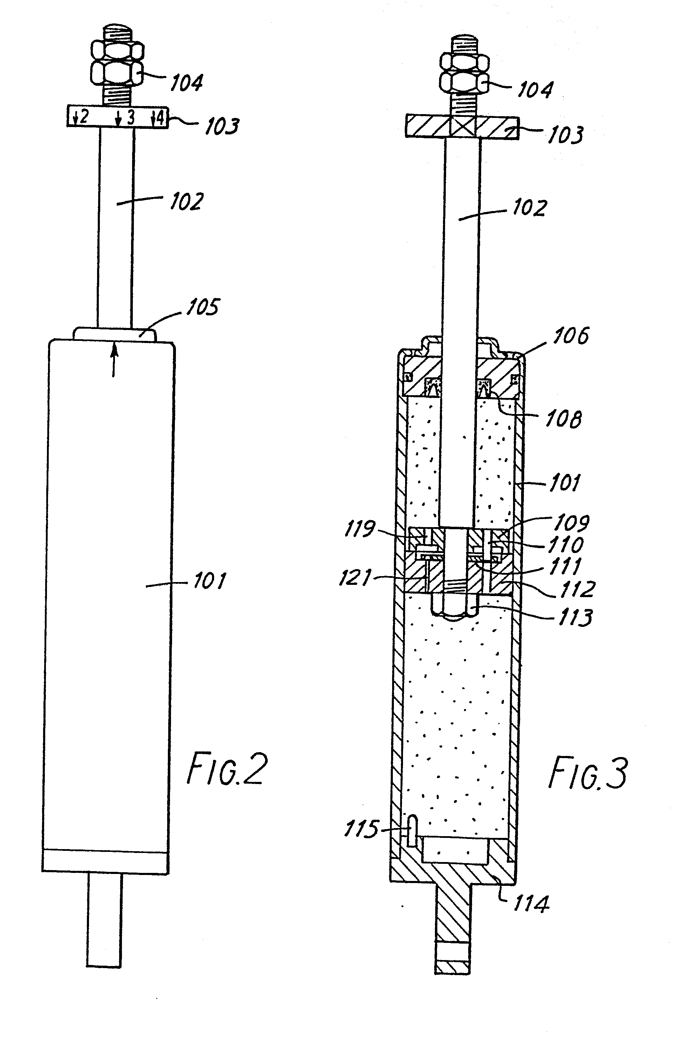

Figure 2 is a side elevation of a hydraulic cylinder forming part of the exerciser,

Figure 3 is a cross-section through the hydraulic cylinder,

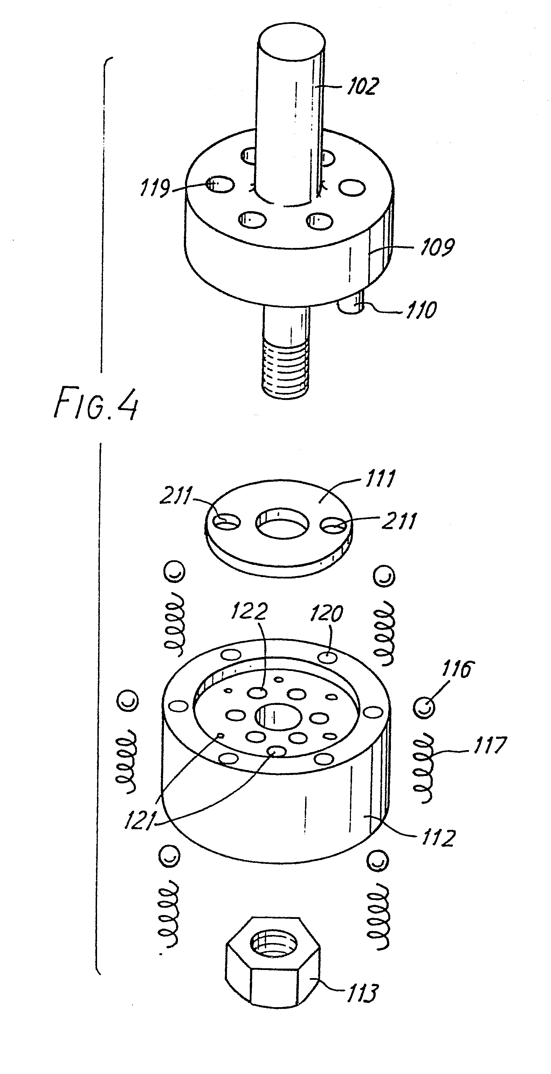

Figure 4 is an exploded view of the piston assembly of the hydraulic cylinder,

Figure 5 is a fragmentary view of the cylinder and piston assembly in section on line V-V of Figure 8, showing the piston assembly moving upwards,

Figure 6 is a view similar to Figure 5, but showing the piston assembly moving downwards,

Figure 7 is a fragmentary view of the piston assembly and the lower part of the cylinder, in section on line VII-VII of Figure 8, showing the piston assembly in its lowermost position,

Figure 8 is a section on line VIII-VIII of Figure 7,

Figure 9 is a section on line IX-IX of Figure 7, and

Figures 10 to 12 illustrate different methods of using the apparatus.

Referring to the drawings, the excerciser comprises a base 1, on which the user can stand, a vertical main column 2, a handle assembly consisting of two handles 13 and 14 pivoted to the main column 2, and a hydraulic cylinder 101 connected between the handle assembly and the main column 2.

The main column 2 fits into a socket 1' fixed to the base 1, and is held in place by a bolt 5. The main column is held rigidly upright by two supporting struts 4. The struts 4 are connected at their lower ends by bolts 20 to a cross-bar 20' fixed to the base 1 and are connected at their upper ends by a pivot 19 to a collar 3 which is fixed to the top of main column 2 by a bolt 6. The bolts 5, 6 and 20 enable the exerciser to be quickly and easily disassembled, for storage or transport, and re-assembled for use.

The handle assembly comprises two handles 13 and 14 having straight portions 13' and 14' joined together to form a lever, and laterally extending portions 13" and 14". Grips 15 and 16 are provided at the outer ends of the handles 13 and 14, positioned so that they can be grasped one in each hand by the user. The straight portions 13' and 14' are connected by by a pivot pin 12 at their lower ends to a collar 10 which is secured to the main column 2 by a bolt 11. Near their upper ends, the straight portions 13' and 14' are

connected by a pivot pin 18 to a U-shaped bracket 17 connected to the outer end of piston rod 102 of the hydraulic cylinder 101. The lower end of the cylinder 101 is connected by a pivot pin 9 to a collar 7 secured to the main column 2 by means of a bolt 8. The main column 2 is formed with a series of spaced holes 8' and 11' which can receive the bolts 8 and 11 securing the collars 7 and 10. This enables the collars to be secured in a number of different positions, so that the height of the grips 15 and 16 suits the user.

The piston rod 102 passes through a seal 108 the end wall 106 of the cylinder 101 and is secured at its lower end to the piston. The piston is in two parts, a lower piston 112 and an upper piston 109. The upper piston 109 is welded to the piston rod 102. The lower piston 112 can rotate on the piston rod 102, and is secured to the piston rod by a nut 113 engaging the screw-threaded end of the piston rod.

The upper piston 109 is formed with a number of holes 119 arranged in a circle around the axis of the piston. A guide pin 110 is fixed in one of the holes and projects from the lower face of the upper piston. The lower piston 112 is formed with a recess 212 in its upper face. The recess 212 houses a valve member in the form of an annular disc 111 slidable on the piston rod 102. The valve member has two holes 211, arranged diametrically opposite one another, one of which is engaged by the guide pin 110.

The lower piston 112 has three concentric rings of holes 120, 121 and 122, the holes of the two inner rings opening into the recess 212. The holes 121 of the middle ring are of different diameters and are arranged in order from the smallest to the largest. The holes of the middle ring are on a circle of diameter equal to the diameter of the ring of holes 119 in the upper piston 109. The holes 120 of the outer ring extend only partway through the lower piston 112. Each hole 120 contains a fine compression spring 117 which urges a steel ball 116 against the lower face of the upper piston. The lower face of the upper piston 109 is formed with notches 118 to receive the balls 116, which act as ball-catches to hold the lower piston 112 in each of a number of positions relative to the upper piston 109, in each of which one of the holes 121 of the middle ring of holes in the lower piston is aligned with the open hole 211 in the valve member 111.

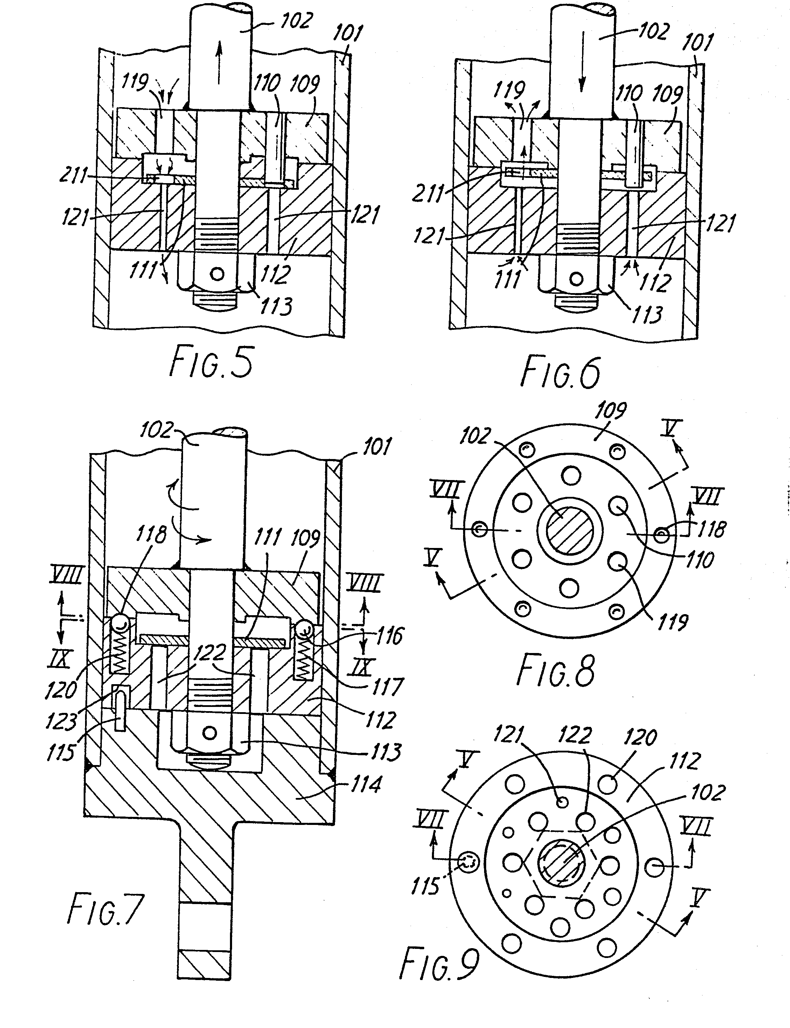

The lower wall 114 of the cylinder has a recess 214 to accommodate the lower end of the piston rod and the nut 113. A pin 115 projects upwards from the lower wall 114. When the piston is in the lowermost position, as shown in Figure 7, the pin 115 can engage in a hole 123 in the lower face of the lower piston 112. This enables the lower piston 112 to be held stationary whilst the upper piston 109 is rotated by rotating the piston rod 102, to change the alignment of the open hole in the valve member 111 with one of the holes 121 in the lower piston 112.   To enable the piston rod 102 to be rotated, a disc 103 is welded to the piston rod near its upper end.   The piston rod is rotatably connected to the bracket 17, the piston rod being secured to the bracket by nuts 104 engaging the threaded end of the piston rod.

The cylinder 101 is filled with hydraulic oil.

When the piston rod 102 is moving upwards relative to the cylinder 101, as shown in Figure 5, the valve member 111 is forced against the upper face of the lower piston 112, closing all the holes 120 and 121 in the lower piston, except for the single hole 120 which is aligned with the open hole 811 in the valve member.  As the piston assembly moves, hydraulic fluid flows from the space above the pistons to the space below, the fluid flowing through the open holes 119 in the upper piston, and through the open hole 211 in the valve member 111 and the hole 120 aligned with hole 211.   The force required to move the piston rod at any given speed will depend on the size of the hole 120 aligned with the hole 211, the requisite force being greatest when the smallest of the holes 120 is in the aligned position and least when the largest of the holes 120 is in the aligned position.

When the piston rod 102 is moving downwards, as shown in Figure 6, the valve member 111 is moved by the hydraulic fluid away from the lower piston 112, thus allowing fluid to flow through all the holes 120 and 121 in the lower piston 112. A raised central portion 209 on the lower face of the upper piston 109 prevents the valve member 111 from closing the open holes 119 in the upper piston, so that fluid can flow through the other open holes 119 as well as the hole 119 aligned with the open hole 211 in the valve member. The resistance to fluid flow is therefore very low, and the piston rod 102 can be moved downwards with very little force.

In use, the exerciser is assembled, and the collars 7 and 10 supporting the hydraulic cylinder 101 and the handle assembly are positioned to suit the user. The user then stands on the base 1, and grasping the handle grips 15 and 16, alternately lifts and lowers the handles. As the handles are lifted, the piston rod moves upwards, so that the user has to exert sufficient force to overcome the resistance of the hydraulic fluid flowing through the piston assembly, so that lifting the handles simulates weight-lifting. Lowering the handles moves the piston rod downwards, so that

very little force is required.   If the user wishes to change the resistance to upward movement of the handles, the handles are first lowered, so that the piston is at its lower position, and the piston rod 102 is rotated until the pin 115 engages in the hole 123 in the lower piston 112.

The disc 103 at the upper end of the piston rod 102 is then rotated to rotate the piston rod.  This in turn rotates the upper piston 109 whilst the lower piston 112 is held stationary by the pin 115.  The piston rod is turned until

the upper piston 109 is in the desired orientation relative to the lower piston 112.  In order to provide an indication of the orientation of the upper piston, the disc 103 may

be provided with markings 203 around its circumference, which can be aligned with a mark 204 on the cylinder 101.  The markings may be numbered, the number indicating the corresponding degree of resistance provided by the apparatus.

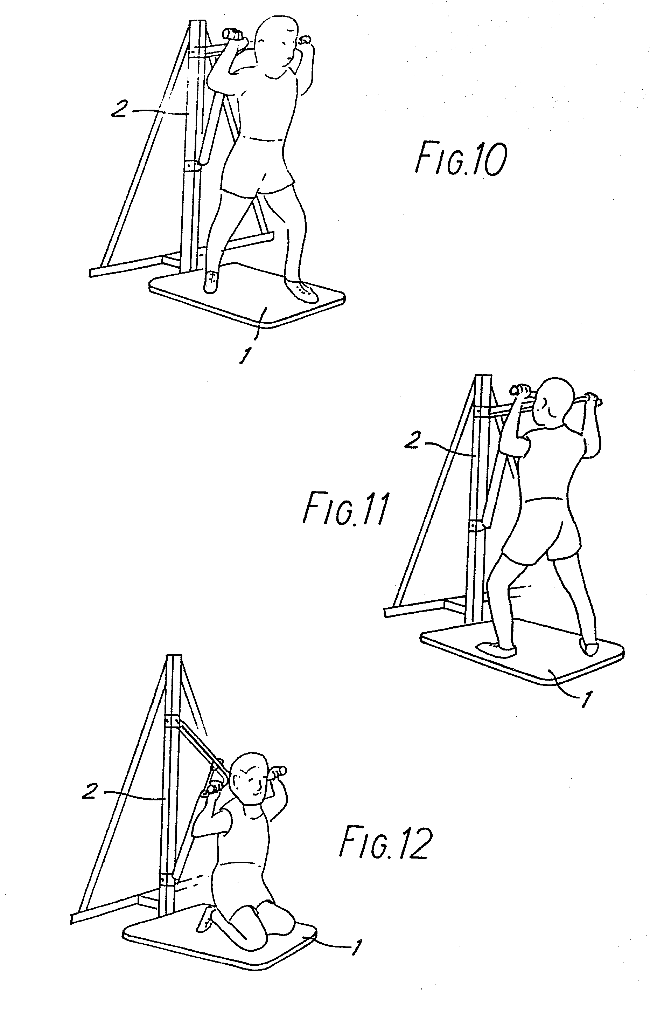

As shown in Figures 10 to 12, the exerciser may be used in various ways, for example with the user standing on the base 1 and facing away from (Figure 10) or towards (Figure 11) the exerciser or with the user kneeling on the

base (Figure 12).

CLAIMS:

1. Exercising apparatus comprising a frame, a handle assembly arranged to be grasped by a user and connected to the frame so that it can be moved upwards and downwards by the user, in which a hydraulic piston and cylinder device is connected between the handle assembly and the frame so that on upward movement of the handle assembly a piston is moved in one direction in the cylinder whilst on downward movement of the handle assembly the piston is moved in the opposite direction, the cylinder is filled with hydraulic fluid and the piston has passage means through which fluid flows from one side of the piston to the other during movement of the piston, and in which the piston is provided with valve means operable to restrict the total cross-sectional area of the passage means when the piston moves in the said one direction, to increase the face required to lift the handles against the resistance of the fluid and to open fully the passage means when the piston moves in the opposite direction to reduce the force required to lower the handles, and adjusting means for adjusting the cross-sectional area of the passage means thereby to adjust the resistance of the fluid to upward movement of the handles.

2.        Exercising apparatus as claimed in claim 1, in which the piston comprises two parts rotatable relative to one another, one part of the piston having a plurality of holes of different cross-sectional areas arranged in a circle around the axis of the piston, all but one of the holes being closed by the valve means when the piston is moving in the said one direction, the selection of the hole which remains open being dependent on the relative angular orientation of the two parts of the piston, and the adjusting means is arranged to alter the relative orientation of the two parts of the piston.

3.        Apparatus as claimed in claim 2, in which the valve means comprises an annular valve member movable axially in a cavity between the two parts of the piston, the valve member having a hole which is aligned with the selected one of said plurality of holes in one part of the piston, the valve member being rotatable with the other part of the piston.

4.        Apparatus as claimed in claim 3, in which the said other part of the piston has a number of passages opening into the cavity between the two parts of the piston, and a guide pin extending through a second hole in the valve member.

5.      Apparatus as claimed in claim 2, in which the
means for altering the relative orientation of the two
parts of the piston comprises interengaging elements on one
part of the piston and on the cylinder, the elements engaging
one another to hold the said one part of the piston against
angular movement when the piston is in a predetermined
position, and the other part of the piston being fixed
to the piston rod so that it can be rotated by rotating
the piston rod.

6.      Apparatus as claimed in claim 2, in which spring
catch means are provided to hold the two parts of the piston
in each of a plurality of relative angular orientations, in
each of which a respective one of the plurality of holes
in the said part of the piston is left open by the
valve means.

7.      Apparatus as claimed in claim 1, in which the
handle assembly is pivoted to the main frame and the
piston and cylinder device is pivoted at its lower end
to the frame and at its upper end to the handle assembly,
and in which the connections to the frame of the piston
and cylinder device and of the handle assembly are adjustable
in position.

- 14 -

8.       Apparatus as claimed in claim 7, in which the frame includes a base positioned below the handle assembly so that the user can stand on the base in use of the apparatus.

9.       Apparatus as claimed in claim 7, in which the handle assembly and the piston and cylinder device are detachable from the frame for storage or transport.

FIG.1

FIG.2

FIG.3

FIG.4

FIG.5

FIG.6

FIG.7

FIG.8

FIG.9

FIG.10

FIG.11

FIG.12